# EUROPEAN PATENT SPECIFICATION

(11) **EP 1 442 935 B1**
(45) Date of publication and mention of the grant of the patent: **19.04.2006**
(21) Application number: 03425062.1
(22) Date of filing: 03.02.2003
(51) Int. Cl.: B60R 5/00

(54) **Overhead luggage bin structure**
Überkopf-Gepäckablagebehälter
Compartiment à bagages installé au-dessus de la hauteur de la tête

(43) Date of publication of application: 04.08.2004
(73) Proprietor: Ellamp Interiors SPA, 21020 Bodio Lomnago(Varese) (IT)
(72) Inventor: Colocci, Mauro, 21020 Bodio Lomnago (Varese) (IT)
(74) Representative: Petruzziello, Aldo

(56) References cited:
- DE-C- 4 431 245
- DE-U- 20 016 392
- US-A- 5 441 326
- US-B1- 6 241 186
- US-B1- 6 318 671

## Description

The present invention refers to an overhead luggage bin structure for locomotion means for transporting people, and in particular for buses.

Specific reference will be made herein to buses, it being understood that the overhead luggage bin structure according to the invention can also be applied to other locomotion means, such as trains, hydrofoils, aircraft and the like.

As is known, especially in long-distance buses, an overhead luggage bin structure is provided above each seat to hold luggage (see, for example, US 5 441 326). Said overhead luggage bin structure is generally disposed beneath the roof of the bus and alongside an aeration channel. Said air channel is defined near the meeting zone of the side wall and the roof of the bus and the air or conditioned air to be delivered to the passenger compartment of the bus passes there through.

Consequently, the overhead luggage bin structure defines the air channel and/or the proper overhead luggage bin, designed to hold the luggage. In the following, the term "overhead luggage bin" is intended to denote such a structure which may lack a proper bin and may be adapted only to define the air channel.

At present, overhead luggage bin structures currently comprise structural shapes which extend substantially for the entire length of the bus, connected by means of supporting brackets spaced apart from each other. The structural shapes and the brackets are fixed to the roof and to the side wall of the bus by means of bolts. As a result, both the structural shapes and the brackets of the overhead luggage bin structure must be designed so as to adapt to the shape of the roof and of the sidewall of the bus for which they are intended.

As is known, the angle between the roof and the side wall of a bus varies according to the type and to the model of the bus. Consequently, it is necessary to produce different types of overhead luggage bin structures according to the type of bus on which they are to be installed.

An object of the present invention is to overcome the drawbacks of the prior art by providing an overhead luggage bin structure that is highly versatile and suitable to be employed in various types of locomotion means for transporting passengers.

Another object of the present invention is to provide an overhead luggage bin structure which has a limited number of components and is inexpensive and easy to make.

These objects are achieved according to the invention with the characteristics listed in appended independent claim 1.

Advantageous embodiments of the invention will be apparent from the dependent claims.

According to the invention, the overhead luggage bin structure for locomotion means for transporting passengers comprises a structural shape for coupling to the roof of the locomotion means and a structural shape for coupling to the wall of the locomotion means joined together by means of a plurality of brackets of the air channel, so as to define a channel for the passage of air near the joining edge between the roof and the wall.

The main characteristic of the invention is represented by the fact that said overhead luggage bin structure comprises fixing means suitable to be fixed firmly to the roof and the side wall and to couple adjustably to the roof coupling structural shape and to the wall coupling structural shape. In this manner the roof coupling structural shape and the wall coupling structural shape can adapt to the particular shape of the roof and of the wall and to the angle of the roof with respect to the wall.

Further characteristics of the invention will be made clearer by the detailed description that follows, referring to purely exemplary and therefore non-limiting embodiments thereof, illustrated in the appended drawings, in which:
Figure 1 is a partially sectional view illustrating an overhead luggage bin structure according to the invention, in its most complete form;
Figure 2 is an enlarged view of a detail of Figure 1, illustrating in an exploded view the system for coupling the overhead luggage bin structure to the roof of a bus;
Figure 3 is an enlarged view of a detail of Figure 1, illustrating in an exploded view the system for coupling the overhead luggage bin structure to the sidewall of a bus;
Figure 4 is an enlarged view of a detail of Figure 1, illustrating in an exploded view the coupling system between the bracket of the air channel and the bracket of the overhead luggage bin structure;
Figure 5 is an enlarged view of a detail of Figure 1, illustrating in an exploded view the coupling system between the bracket of the air channel and the bottom covers of the air channel and the overhead luggage bin structure;
Figure 6 is a plan view of a bracket of the air channel;
Figure 7 is a plan view of a bracket of the overhead luggage bin structure;
Figure 8 is a partially cross-sectional view, like Figure 1, illustrating an overhead luggage bin structure according to the invention in its most simplified form.

An overhead luggage bin structure according to the invention is described with the aid of the figures.

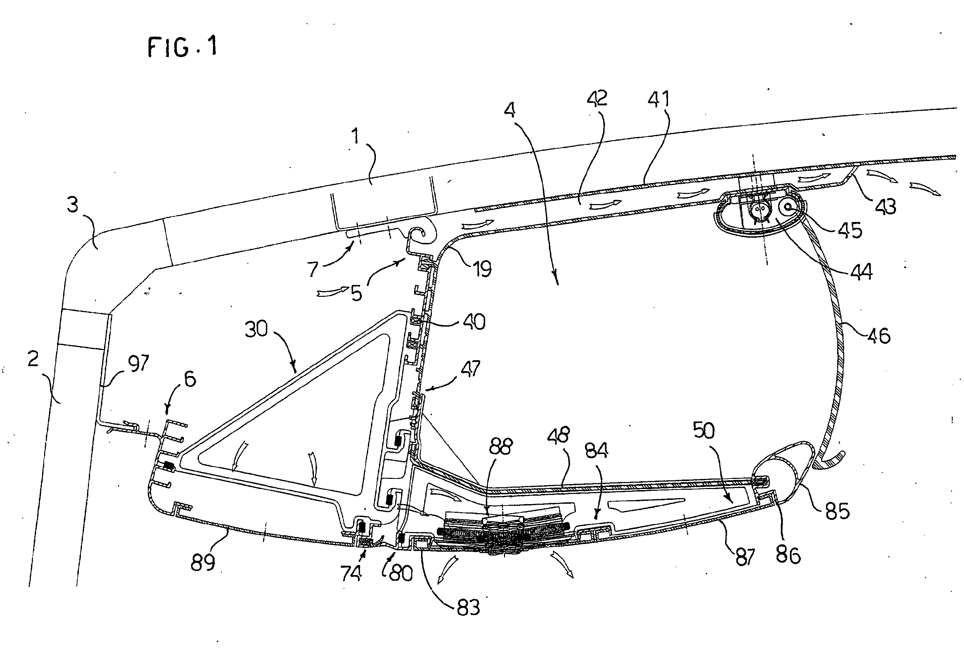

With reference to Figure 1, a roof 1 of a bus and a side wall 2 of a bus joined by an angular edge 3 are illustrated in part. The plane of the roof 1 and the plane of the side wall 2 form an obtuse angle α which is slightly greater than 90°. The angle α varies according to the types and to the models of bus. The roof 1 also, which is shown rectilinear in the example, can take on a convex shape or other curvature, according to the model of bus.

An overhead luggage bin structure, denoted as a whole with reference numeral 4, comprises a structural shape 5 for coupling to the roof 1 and a structural shape 6 for coupling to the wall 2 joined together by means of a plurality of brackets 30. The structural shapes 5 and 6 for coupling to the roof and to the wall extend substantially for the entire length of the bus, whereas the brackets 30 are spaced apart from one another.

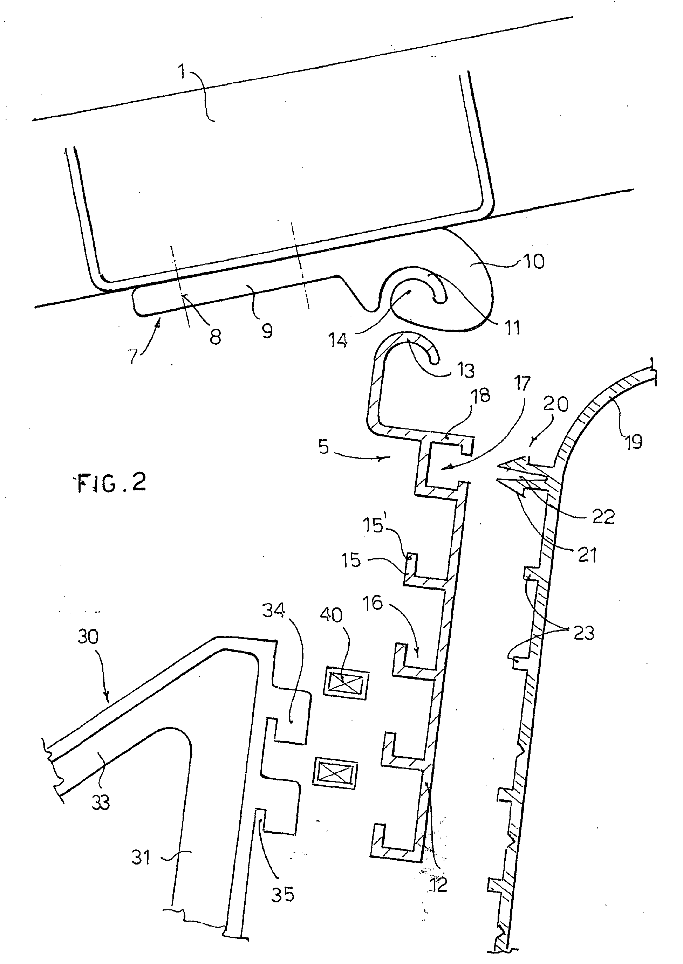

As better shown in Figure 2, the roof coupling structural shape 5 is fixed to the roof 1 by means of a roof coupling support 7 (visible in the Figure), in the form of an extruded structural shape which extends for the entire length of the bus. A plurality of supports 7 for coupling to the roof, spaced apart from each other along the entire length of the bus, can also be used. The support 7 for coupling to the roof is fixed to the underside of the roof 1 by means of bolts 8.

The support 7 for coupling to the roof has a base portion 9 which abuts against the underside of the roof 1. One end of the base part 9 extends in a supporting part 10, rounded in shape and thicker, which protrudes downward from the base part. In the supporting part 10 of the roof coupling support a cam seat 11 is provided, formed by a curved slot, substantially C-shaped when seen in cross section. The curved slot 11 defines an end 14 of the supporting part having a rounded profile.

The roof coupling structural shape 5 comprises a flat rectangular plate 12, designed to be disposed along a substantially vertical plane, parallel to the side wall 2 of the bus.

Said roof coupling structural shape 5 has a top end 13 having a curved shape, with a substantially C-shaped curve, complementary to the curved seat 11 of the roof coupling support.

In this manner the end 13 of the roof coupling structural shape 5 can engage in the seats 11 of the roof coupling supports 10 and thus the curved end 13 of the roof coupling structural shape is supported, with the possibility of angular adjustment, on the rounded end 14 of the roof coupling supports. As a result, the roof coupling structural shape 12 [the plate 12 of the roof coupling structural shape 5; translator's note] can be turned around a longitudinal axis passing through the centre of curvature of its end 13, so as to adapt to the shape of the roof 1 and of the wall 2 of the bus, that is to say to the angle α defined between the roof 1 and the wall 2 of the bus, and to the curvature of the roof 1.

Supporting ribs 15, ending in a part 15' that protrudes upward so as to give rise to a substantially L-shaped profile in cross section, protrude horizontally from the plate 12 of the roof coupling structural shape toward the wall 2 of the bus (toward the left with reference to the Figures). In this manner, each supporting rib 15 defines a coupling seat 16 having a U-shaped profile. In the Figures four supporting ribs 15 placed equidistant in height from one another have been shown by way of example.

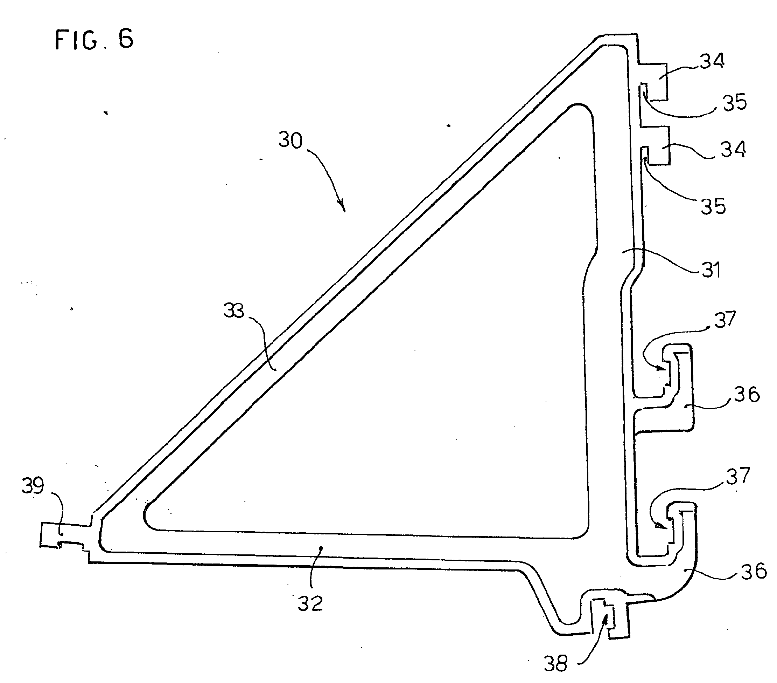

A plurality of brackets 30 of the air channel disposed spaced apart from each other are fixed to the roof coupling structural shape 5. As shown in Figure 6, the bracket of the air channel 30 is shaped as a triangle with a right angle. The bracket 30 is defined by three sides, that is to say a vertical cathetus 31, a horizontal cathetus 32 and a hypotenuse 33.

Two downward facing, outward protruding coupling teeth 34 are provided on the vertical cathetus 31, near the top end thereof. Each tooth 34 has a slot 35. Again on the vertical cathetus 31, near the bottom end thereof, two hooks 36 which protrude outward and upward and have an inverted L-shape to define respective coupling seats 37 are provided.

A downward facing coupling seat 38, defined by a substantially inverted U-shaped profile, is provided in the horizontal cathetus 32 near the vertical cathetus 31. An outward protruding coupling tooth 39 is provided at the end of the horizontal cathetus 31 facing towards the hypotenuse 33.

Returning to Figures 1 and 2, the bracket 30 is coupled to the roof coupling structural shape 5, inserting the top teeth 34 of the bracket into the seats 16 of the structural shape 5. Subsequently the bracket 30 is lowered so that the upward facing protrusions of the ribs 15 of the structural shape 5 engage in the slots 35 of the teeth 34 of the bracket. At this point, spacers 40 that block the bracket firmly are inserted longitudinally into gap remaining into the seats 16 of the structural shape 5. It should be noted that the position of each bracket 30 can be adjusted in height, according to the seats 16 occupied by the teeth 34, to allow the structure to be adapted to different angles of inclination thereof.

In the plate 12 of the roof coupling structural shape, beneath the curved upper end 13, a coupling seat 17 facing in the opposite direction to the wall 2 of the bus (toward the right with reference to the Figures) is provided. The coupling seat 17 is defined by a substantially C-shaped portion 18 of the plate 12.

A top cover or hood 19 of the overhead luggage bin structure with a substantially inverted L-shape in cross section so as to define a top part, substantially parallel to the roof 1 and a side part substantially parallel to the wall 2, is fixed to the roof coupling structural shape 5.

The top cover 19 has pins or clips 20 able to engage in the seats 17 of the roof coupling structural shape. Each clip 20 consists of two elastic tongues 21, separated from each other by a slot 22, so as to be able to bend elastically in said slot 22.

Furthermore, protrusions 23, acting as shock-absorbers to abut against the plate 12 of the roof coupling structural shape, are provided in the side portion of the closing hood or cover 19.

As shown in Figure 1, the hood 19 is disposed at a short distance from a plate-shaped structural shape 41 fixed to the underside of the roof 1. In this manner a channel 42 for the passage of air is defined between the structural shape 41 and the hood 19. For this purpose slots 43 are provided at one end of the hood 19 for discharge of the air from the channel 42 into the passenger compartment of the bus.

A seat able to receive a support 44 for the door is defined in the hood 19, near the air outlet end 43. A door 46 to close the overhead luggage bin structure is hinged to the support 44 by means of a pivot 45.

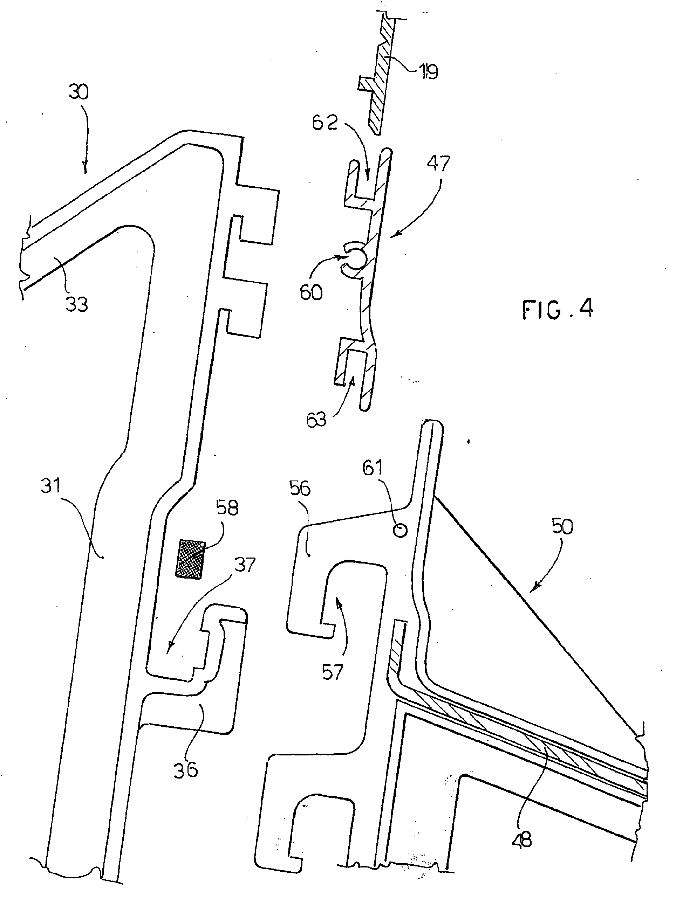

As shown better in Figure 4, the bottom end of the side part of the hood 19 is connected, by means of a upper connecting structural shape 47, to a base cover 48 of the overhead luggage bin, which forms the base on which the luggage is placed. The base cover 48 of the overhead luggage bin structure is supported by a plurality of brackets of the overhead luggage bin, arranged spaced out.

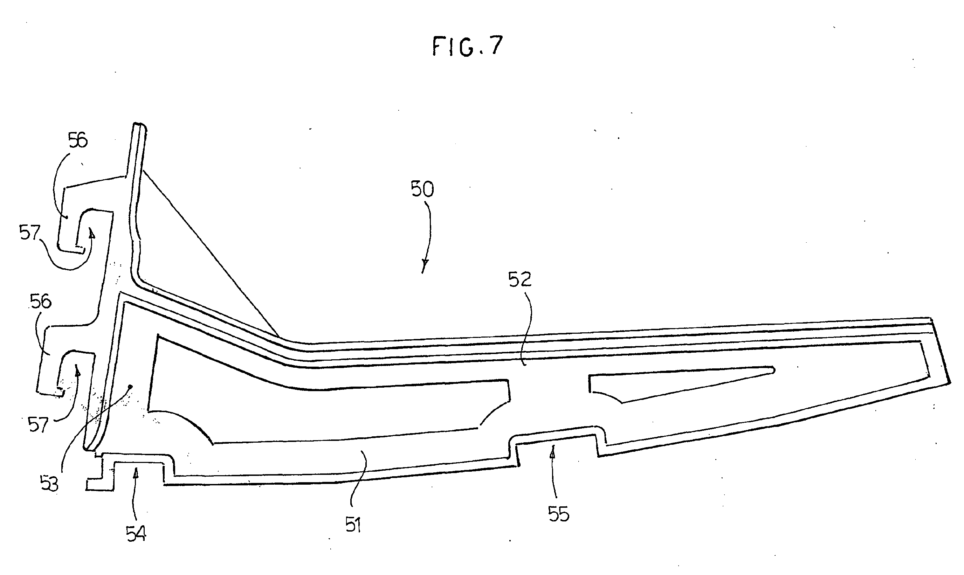

As shown in Figure 7, the bracket 50 of the overhead luggage bin structure has an irregular substantially triangular shape, and has a bottom side 51, a top side 52 and a vertical side 53. The base cover 48 of the overhead luggage bin structure is supported in the top side 52. A first seat 54, near the vertical side 53, and a second seat 55 in a central position are formed in the bottom side 51. Two hooks 56 protruding outward and downward so as to define respective seats 57 are provided in the vertical side 53. The hooks 56 of the luggage bin bracket are of a shape substantially complementary to that of the hooks 36 of the air channel bracket.

As shown in Figures 1 and 4, the hooks 56 of the luggage bin bracket engage in the slots 37 of the hooks of the air channel bracket and the hooks 36 of the air channel bracket engage reciprocally in the slots 57 of the hooks of the luggage bin bracket. To eliminate play, a longitudinal spacer 58 is inserted between the hooks 36 and 56.

It should be noted that by adjusting the height of the air channel brackets 30, the luggage bin brackets 50 and thus the base 48 of the overhead luggage bin structure are also adjusted in height, thus reducing or increasing the vertical distance between the base 48 of the overhead luggage bin structure and the upper part of the hood 19 as desired, with a consequent reduction or increase of the capacity of the luggage compartment.

Coming back to Figure 4, the upper connecting structural shape 47 has a substantially inverted C-shaped seat 60 in a central position which hooks onto a pin 61. The connecting structural shape 47 has at its top end a U-shaped seat 62 which receives the bottom end of the hood 19. Furthermore, the connecting structural shape 47 has at its bottom end an inverted U-shaped seat 63 which receives the top end of the bottom cover 48 of the overhead luggage bin.

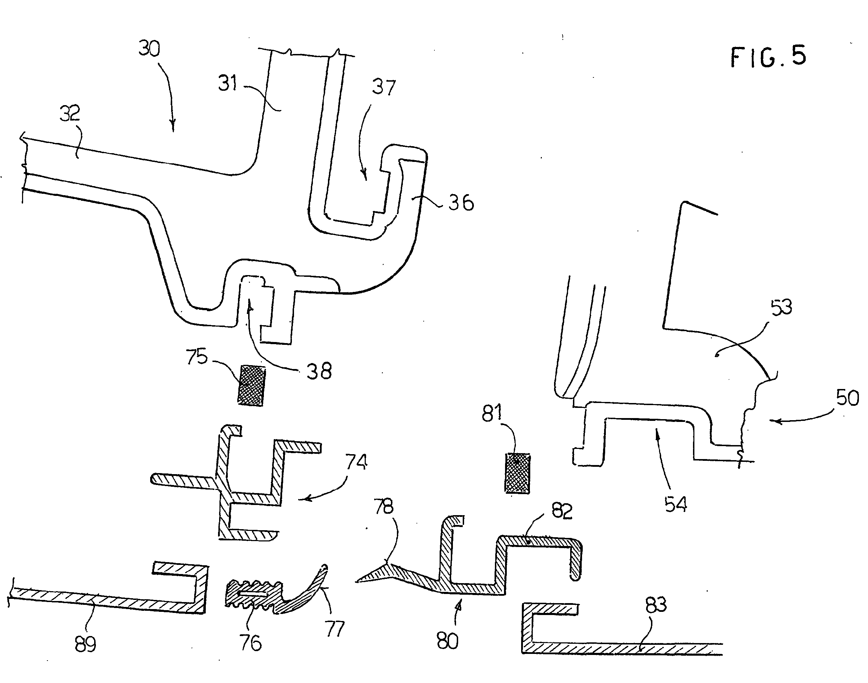

As shown in Figures 1 and 5, a substantially Greek fret-shaped structural shape 74 engages in the seat 38 of each air channel bracket. A spacer 75 is inserted in the seat 38 of the bracket 30 to fix the Greek fret-shaped structural shape 74.

Fixed to the Greek fret-shaped structural shape is an abutment structural shape 76 which has a rounded abutment surface 77 that abuts against a rounded abutment surface 78 of another connecting structural shape 80 which is fixed to the bracket 50 of the overhead luggage bin. To eliminate play between the bracket 50 of the overhead luggage bin structure and the structural shape 80 and also for mechanical fixing between the bracket 50 and the structural shape 80, a spacer 81 is used.

The connecting structural shape 80 has a portion 82 shaped substantially as an inverted U which engages in the seat 54 of the bracket 50. The folded edge of a bottom cover 83 is fixed to the inverted U-shaped portion 82.

Returning to Figure 1, the other edge of the bottom cover 83 is fixed to a T-shaped structural shape 84 disposed in the seats 55 of each bracket 50 of the overhead luggage bin.

A handrail 85 in the form of a substantially tubular structural shape is mounted at the free end of each luggage bin bracket 50 and also forms an abutment ledge for the luggage if the door 46 is not provided. In any case the bottom end of the door 46 abuts against the handrail 85.

An inverted U-shaped seat 86 is provided in the bottom part of the handrail 85. Another bottom cover 87 has an edge fixed to the T-shaped structural shape 84 and the other edge fixed in the slot 86 of the handrail 85.

Between the bottom cover 83 and the base cover 48 a space is left wherein a functional assembly 88 called "multiset" is installed. The multiset 88 can include adjustable lights, air outlet nozzles and the like.

A third bottom cover 89 fixed to the Greek fret-shaped structural shape is directed toward the wall 2 of the bus, defining the bottom wall of the air channel. Said cover 89 is fixed to the wall connection structural shape 6.

Although the multiset 88 has been shown mounted on the bottom cover 83 disposed beneath the base 48 of the overhead luggage bin, the multiset 88 could similarly be mounted on the bottom cover 89 which defines the air channel.

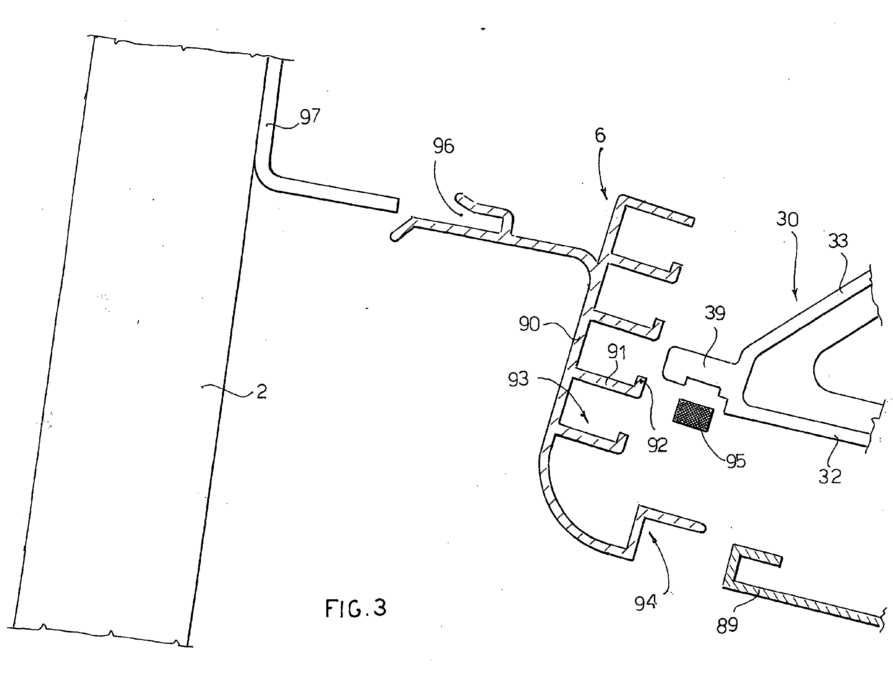

As shown in Figure 3, the wall connection structural shape 6 comprises a flat, vertical rectangular plate 90 from which protrude horizontal ribs 91 facing in the opposite direction to the wall 2 of the bus. Each rib 91 ends in an upward facing retaining tooth 92 which defines a seat 93. Four ribs 91 spaced at an equal distance from each other are preferably provided for better adjustment.

The seats 93 of the wall connection structural shape 6 are able to receive the coupling teeth 39 of the air channel brackets 30. To eliminate play between the teeth 39 of the brackets 30 and the ribs 91 of the wall connection structural shape 6, a spacer 95 in the form of a plug is inserted.

It should be noted that according to the position in which the tooth 39 of the bracket 30 is inserted in the relative seat 93, the height and inclination of the bracket 30 of the air channel can be adjusted, adapting it to the shape of the sidewall 2 and the roof 1 of the bus.

In the part of the wall coupling structural shape toward the wall 2 a horizontal rib extends which ends in a substantially inverted U-shaped portion which defines a seat 96 able to receive the ends of one or more substantially L-shaped supports 97 fixed by means of bolts to the side wall 2 of the bus.

The bottom end of the structural shape 6 is rounded and ends in a substantially inverted L-shaped seat able to receive the folded inverted U-shaped edge of the bottom cover 89.

Figure 1 shows an overhead luggage bin structure 4 in its most complete form, able to support various optional elements of the overhead luggage bin, such as the base 48, the brackets 50, the bottom covers 83, 87 with the multiset 88, the handrail 85 and the door 46.

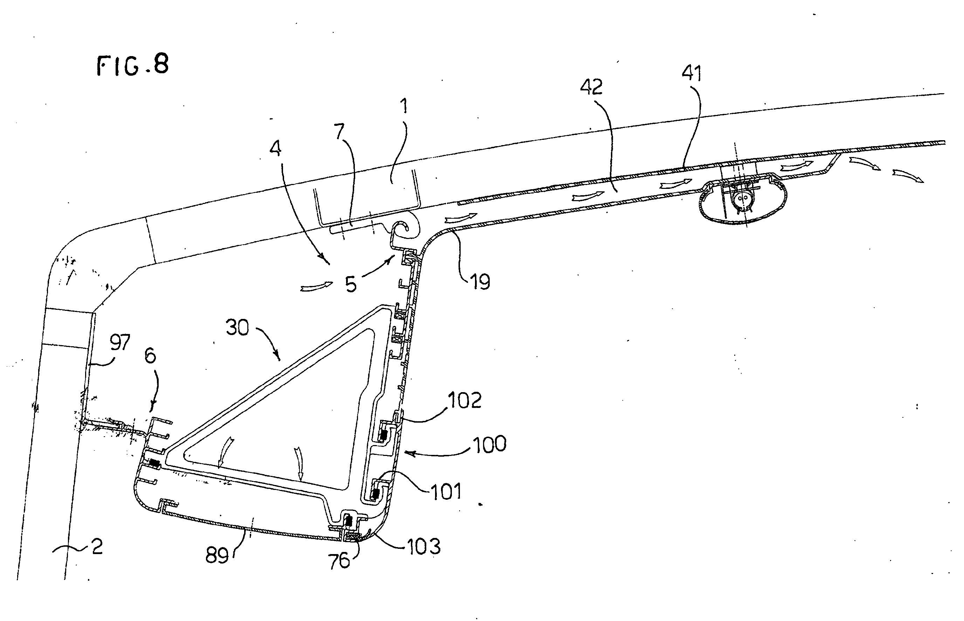

Figure 8 shows an overhead luggage bin structure 4 in its simplest form, wherein the optional elements of the overhead luggage bin structure have been omitted and wherein like or similar elements to those already described are denoted by the same reference numerals and a detailed description thereof is omitted. In this case the overhead luggage bin structure 4 comprises a side cover structural shape 100 which, together with the hood 19 and the bottom cover 89, defines the air channel.

The side cover structural shape 100 has at its top end a U-shaped seat 102 able to receive the bottom end of the hood 19 and ribs 101 able to engage in the seats 37 of the hooks 36 of the air channel brackets 30 and a rounded bottom end 103 able to abut with the rounded abutment surface 77 (Figure 5) of the abutment structural shape 76.

Numerous variations and modifications of detail within the reach of a person skilled in the art can be made to the present embodiments of the invention, without thereby departing from the scope of the invention, as set forth in the appended claims.

## Claims

1. An overhead luggage bin structure (4) for locomotion means for the transportation of passengers, such as buses and the like, comprising a structural shape (5) for coupling to the roof (1) and a structural shape (6) for coupling to a side wall (2) of the locomotion means, connected to each other by means of a plurality of brackets (30) of the air channel, so as to define, near the joining edge (3) between the roof (1) and the wall (2), a channel for the passage of air,
**characterised in that** said overhead luggage bin structure (4) comprises fixing means (7, 27) able to be fixed firmly to the roof (1) and to the side wall (2), respectively, and able to couple adjustably to said structural shape (5) for coupling to the roof (1) and to said structural shape (6) for coupling to the side wall (2) so as to allow the structural shape (5) for coupling to the roof and the structural shape (6) for coupling to the wall to be adaptable to the shape of the roof (1) and of the wall (2) and to the angle of inclination (α) of the roof (1) with respect to the wall (2).

2. An overhead luggage bin structure according to claim 1, **characterised in that** said means for fixing to the roof (1) comprise at least one support (7) suitable to be fixed to the underside of the roof (1) and having a curved slot (11) suitable to receive the curved top end (13) of said roof coupling structural shape (5), so that said roof coupling structural shape (5) can rotate around the axis passing through the centre of curvature of said curved slot (11) of the roof fixing support (7) to adapt to said angle of inclination (α) of the roof (1) with respect to the wall (2), as well as to the shape of the roof (1).

3. An overhead luggage bin structure according to claim 1 or 2, **characterised in that** said means for fixing to the wall comprise at least one support (97), substantially L-shaped in cross section, suitable to be fixed to the inside surface of the wall (2) and said structural shape (6) for coupling to the wall (2) comprises a horizontal rib ending in a seat (96), shaped substantially as an inverted "U" in cross section, suitable to be engaged by the free end of said wall fixing supports (97).

4. An overhead luggage bin structure according to any one of the preceding claims,
**characterised in that** said roof and wall coupling structural shapes (5, 6) have coupling and adjustment means (15, 16, 91, 93) cooperating with complementary coupling means (34, 39) provided in said brackets (30) of the air channel to adjust the position of said air channel brackets (30) according to said angle of inclination (α) of the roof (1) with respect to the wall (2).

5. An overhead luggage bin structure according to claim 4, **characterised in that** said coupling and adjustment means (15, 16, 91, 93) of said roof and wall coupling structural shapes (5, 6) are horizontal ribs (15, 91) ending in upward protruding ribs (15', 92) so as to define respective coupling seats (16, 93) and said complementary coupling means (34, 39) of said air channel brackets (30) are teeth or hooks (34, 39) able to engage in said seats (16, 93), through the use of spacers (40, 95) to eliminate play.

6. An overhead luggage bin structure according to any one of the preceding claims,
**characterised in that** said air channel brackets (30) are shaped substantially as a set square with a right angle.

7. An overhead luggage bin structure according to any one of the preceding claims,
**characterised in that** it comprises:
- a bottom cover (89) the edges of which are fixed to said wall coupling structural shape (6) and to said air channel bracket (30), and
- a hood (19) in the form of a plate bent substantially in an inverted L-shape so as to have a top portion, substantially parallel to the roof (1) and a side portion substantially parallel to the wall (2), the side portion of the hood (19) being fixed to said roof coupling structural shape (5), a transverse channel (42) for the passage of air from the air channel to the passenger compartment of the locomotion means being defined between the roof (1) and the top part of the hood (19).

8. An overhead luggage bin structure according to any one of the preceding claims,
**characterised in that** it comprises a plurality of brackets (50) of the overhead luggage bin structure that can be fixed to said brackets (30) of the air channel to support a base cover (48) of the overhead luggage bin structure designed to support the luggage.

9. An overhead luggage bin structure according to claim 8, **characterised in that** said brackets (50) of the overhead luggage bin structure have hooks (56) able to engage with complementary hooks (36) provided in said air channel brackets (30) after interposition of a spacer (58) to eliminate play and fix the various components to each other.

10. An overhead luggage bin structure according to claim 8 or 9, **characterised in that** it comprises bottom covers (83, 87) fixed to said brackets (50) of the overhead luggage bin structure beneath said base cover (48).

11. An overhead luggage bin structure according to claim 10, **characterised in that** it comprises a multiset (88) consisting of lights and or/air outlets, mounted in at least one of said bottom covers of the air channel and of the overhead luggage bin structure (89, 83, 87) and disposed in the air channel and/or in the space generated between the base cover (48) of the overhead luggage bin structure and the bottom covers (83, 87) of the overhead luggage bin structure.

12. An overhead luggage bin structure according to any one of claims 7 to 11, **characterised in that** there is mounted in the upper part of said hood (19) a support (44) for the door whereto a door (46) is hinged to close the overhead luggage bin structure.

## Patentansprüche

1. Überkopfgepäckfachstruktur (4) für Fortbewegungsmittel zur Beförderung von Passagieren wie Busse und Ähnliche, umfassend einen Strukturaufbau (5) zum Verbinden mit dem Dach (1) und einen Strukturaufbau (6) zum Verbinden mit einer Seitenwand (2) des Fortbewegungsmittels, welche miteinander mittels einer Mehrzahl von Klammern (30) des Luftkanals verbunden sind, um so nahe der Zusammenfügungskante (3) zwischen dem Dach (1) und der Seitenwand (2) einen Kanal für das Durchströmen von Luft zu definieren,
**dadurch gekennzeichnet, dass** die Überkopfgepäckfachstruktur (4) Befestigungsmittel (7, 27) umfasst, welche jeweils fest am Dach (1) und der Seitenwand (2) befestigt werden können und einstellbar mit dem Strukturaufbau (5) zum Verbinden mit dem Dach (1) und mit dem Strukturaufbau (6) zum Verbinden mit der Seitenwand (2) verbunden werden können, um so dem Strukturaufbau (5) zum Verbinden mit dem Dach und mit dem Strukturaufbau (6) zum Verbinden mit der Seitenwand (2) zu ermöglichen, an die Form des Daches (1) und der Wand (2) und an den Neigungswinkel (α) des Daches (1) in Bezug auf die Wand (2) anpassbar zu sein.

2. Überkopfgepäckfachstruktur gemäß Anspruch 1, **dadurch gekennzeichnet, dass** die Mittel zum Befestigen am Dach (1) wenigstens eine Halterung (7) umfassen, welche geeignet an der Unterseite des Daches (1) befestigt werden kann und einen gebogenen Schlitz (11) aufweist, welcher geeignet ist, das gebogene obere Ende (13) der Dachverbindungsstrukturform (5) aufzunehmen, so dass die Dachverbindungsstrukturform (5) sich um die Achse drehen kann, die durch die Mitte der Krümmung des gebogenen Schlitzes (11) der Dachbefestigungshalterung (7) hindurchgeht, um sich so an den Neigungswinkel (α) des Daches (1) in Bezug auf die Wand (2) als auch an die Form des Daches (1) anzupassen.

3. Überkopfgepäckfachstruktur gemäß Anspruch 1 oder 2, **dadurch gekennzeichnet, dass** die Mittel zum Befestigen an der Wand wenigstens eine Halterung (97), im Wesentlichen von L-förmigem Querschnitt, umfasst, welche geeignet ist an der Innenseitenoberfläche der Wand (2) befestigt zu werden, und **dadurch gekennzeichnet, dass** der Strukturaufbau (6) zum Verbinden mit der Wand (2) eine waagrechte Rippe umfasst, welche in einer Aufnahme (96) endet, die im Wesentlichen als ein umgekehrtes "U" im Querschnitt ausgeformt ist und geeignet ist, mit dem freien Ende der Wandbefestigungshalterungen (97) in Eingriff zu gelangen.

4. Überkopfgepäckfachstruktur gemäß jedem der vorangehenden Ansprüche,
**dadurch gekennzeichnet, dass** die Dach- und Wandverbindungsstrukturaufbauten (5, 6) Verbindungs- und Einstellungsmittel (15, 16, 91, 93) aufweisen, welche mit komplementären Verbindungsmitteln (34, 39) zusammenwirken, welche in den Klammern (30) des Luftkanals vorgesehen sind, um die Position der Luftkanalklammern (30) dem Neigungswinkel (α) des Daches (1) in Bezug auf die Wand (2) entsprechend anzupassen.

5. Überkopfgepäckfachstruktur gemäß Anspruch 4, **dadurch gekennzeichnet, dass** die Verbindungs- und Einstellungsmittel (15, 16, 91, 93) der Dach- und Wandverbindungsstrukturaufbauten (5, 6) waagrechte Rippen (15, 91) sind, welche in nach oben vorragenden Rippen (15', 92) enden, um so die jeweiligen Verbindungsaufnahmen (16, 93) zu definieren, und **dadurch gekennzeichnet, dass** die komplementären Verbindungsmittel (34, 39) der Luftkanalklammern (30) Zähne oder Haken (34, 39) sind, welche in die Aufnahmen (16, 93) durch den Einsatz von Abstandhaltern (40, 95) eingreifen können, um Spiel auszuschalten.

6. Überkopfgepäckfachstruktur gemäß jedem der vorangehenden Ansprüche,
**dadurch gekennzeichnet, dass** die Luftkanalklammern (30) im Wesentlichen als ein Dreieck mit einem rechten Winkel ausgeformt sind.

7. Überkopfgepäckfachstruktur gemäß jedem der vorangehenden Ansprüche,
**dadurch gekennzeichnet, dass** sie umfasst:
- eine Bodenabdeckung (89), deren Kanten an dem Wandverbindungsstrukturaufbau (6) und an der Luftkanalklammer (30) befestigt sind, und
- eine Haube (19) in der Form einer Platte, welche im Wesentlichen in eine hängende L-Form gebogen ist, um so einen oberen Abschnitt im Wesentlichen parallel zum Dach (1) und einen Seitenabschnitt im Wesentlichen parallel zur Wand (2) aufzuweisen, wobei der Seitenabschnitt der Haube (19) am Dachverbindungsstrukturaufbau (5) befestigt ist, wobei ein Querkanal (42) für das Durchströmen von Luft vom Luftkanal zum Fahrgastraum des Fortbewegungsmittels zwischen dem Dach (1) und dem oberen Abschnitt der Haube (19) definiert ist.

8. Überkopfgepäckfachstruktur gemäß jedem der vorangehenden Ansprüche,
**dadurch gekennzeichnet, dass** sie eine Mehrzahl von Klammern (50) der Überkopfgepäcksfachstruktur umfasst, welche an den Klammern (30) des Luftkanals befestigt werden können, um eine Bodenabdeckung (48) der Überkopfgepäcksfachstruktur zu tragen, welche zum Tragen des Gepäcks konstruiert ist.

9. Überkopfgepäckfachstruktur gemäß Anspruch 8, **dadurch gekennzeichnet, dass** die Klammern (50) der Überkopfgepäcksfachstruktur Haken (56) aufweisen, die in der Lage sind, in komplementäre Haken (36), welche in den Luftkanalklammern (30) bereitgestellt sind, nach Zwischenlegen eines Abstandhalters (58), um Spiel auszuschalten, einzugreifen und die verschiedenen Bauteile miteinander zu fixieren.

10. Überkopfgepäckfachstruktur gemäß Anspruch 8 oder 9, **dadurch gekennzeichnet, dass** sie Untersichtabdeckungen (83, 87) umfasst, welche an den Klammern (50) der Überkopfgepäcksfachstruktur unterhalb der Bodenabdeckung (48) befestigt sind.

11. Überkopfgepäckfachstruktur gemäß Anspruch 10, **dadurch gekennzeichnet, dass** sie einen Vielfunktionssatz (88) umfasst, welcher aus Beleuchtungen und/oder Belüftungsauslässen besteht, welcher in wenigstens einer der Untersichtabdeckungen des Luftkanals und/oder der Überkopfgepäcksfachstruktur (89, 83, 87) angebracht und im Luftkanal und/oder in dem Raum, der sich zwischen der Bodenabdeckung (48) der Überkopfgepäcksfachstruktur und den Untersichtabdeckungen (83, 87) der Überkopfgepäcksfachstruktur ergibt, angeordnet ist.

12. Überkopfgepäckfachstruktur gemäß jedem der Ansprüche 7 bis 11, **dadurch gekennzeichnet, dass** im oberen Abschnitt der Haube (19) eine Halterung (44) für die Fachtür angebracht ist, an die eine Tür (46) gelenkig angebracht ist, um die Überkopfgepäcksfachstruktur zu verschließen.

## Revendications

1. Structure suspendue de casier à bagages (4) pour moyen de locomotion pour le transport de passagers, comme des bus et similaires, comprenant une forme structurelle (5) à coupler au toit (1) et une forme structurelle (6) à coupler à une paroi latérale (2) du moyen de locomotion, connectées entre elles au moyen d'une pluralité de consoles (30) du canal à air de manière à définir, près du bord de jointure (3), entre le toit (1) et la paroi (2), un canal pour le passage de l'air,
**caractérisée en ce que** ladite structure suspendue de casier à bagages (4) comprend des moyens de fixation (7, 27) susceptibles d'être fixés solidement au toit (1) et à la paroi latérale (2) respectivement et de se coupler de manière ajustable à ladite forme structurelle (5) à coupler au toit (1) et à ladite forme structurelle (6) à coupler à la paroi latérale (2) afin de permettre à la forme structurelle (5) à coupler au toit et à la forme structurelle (6) à coupler à la paroi d'être adaptables à la forme du toit (1) et de la paroi (2) et à l'angle d'inclinaison (α) du toit (1) par rapport à la paroi (2).

2. Structure suspendue de casier à bagages selon la revendication 1, **caractérisée en ce que** ledit moyen de fixation au toit (1) comprend au moins un support (7) susceptible d'être fixé sur le dessous du toit (1) et présentant une fente incurvée (11) susceptible de recevoir l'extrémité supérieure incurvée (13) de ladite forme structurelle (5) couplée au toit, de sorte que ladite forme structurelle couplée au toit (5) peut tourner autour de l'axe traversant le centre d'incurvation de ladite fente incurvée (11) du support de fixation au toit (7) pour s'adapter audit angle d'inclinaison (α) du toit (1) par rapport à la paroi (2) ainsi qu'à la forme du toit (1).

3. Structure suspendue de casier à bagages selon la revendication 1 ou 2,
**caractérisée en ce que** ledit moyen de fixation à la paroi comprend au moins un support (97) sensiblement en forme de L en section transversale, susceptible d'être fixé à la surface intérieure de la paroi (2) et que ladite forme structurelle (6) à coupler à la paroi (2) comporte une nervure horizontale se terminant dans un siège (96) conformé sensiblement en « U » inversé en section transversale et où est susceptible de s'engager l'extrémité libre desdits supports de fixation à la paroi (97).

4. Structure suspendue de casier à bagages selon l'une quelconque des revendications précédentes, **caractérisée en ce que** ledit toit et lesdites formes structurelles couplées à la paroi (5, 6) ont des moyens de couplage et d'ajustement (15, 16, 91, 93) coopérant avec des moyens d'ajustement complémentaires (34, 39) prévus dans lesdites consoles (30) du canal à air pour ajuster la position desdites consoles de canal à air (30) en fonction dudit angle d'inclinaison (α) du toit (1) par rapport à la paroi (2).

5. Structure suspendue de casier à bagages selon la revendication 4, **caractérisée en ce que** lesdits moyens de couplage et d'ajustement (15, 16, 91, 93) dudit toit et lesdites formes structurelles (5, 6) couplées à la paroi sont des nervures horizontales (15, 91) se terminant dans des nervures protubérantes vers le haut (15', 92) de manière à définir des sièges de couplage respectifs (16, 93) et que lesdits moyens de couplage complémentaires (34, 39) desdites consoles de canal à air (30) sont des dents ou des crochets (34, 39) susceptibles de s'engager dans lesdits sièges (16, 93) en utilisant des entretoises (40, 95) pour éliminer le jeu.

6. Structure suspendue de casier à bagages selon l'une quelconque des revendications précédentes, **caractérisée en ce que** lesdites consoles de canal à air (30) sont réalisées sensiblement sous forme d'une équerre à angle droit.

7. Structure suspendue de casier à bagages selon l'une quelconque des revendications précédentes, **caractérisée en ce qu'**elle comprend :
- un recouvrement de fond (89) dont les bords sont fixés à ladite forme structurelle (6) couplée à la paroi et à ladite console de canal à air (30) et
- une hotte (19) sous la forme d'une plaque fléchie sensiblement en forme de L inversé de manière à ce qu'on ait une partie supérieure sensiblement parallèle au toit (1) et une partie latérale sensiblement parallèle à la paroi (2), la partie latérale de la hotte (19) étant fixée à ladite forme structurelle (5) couplée au toit, un canal transversal (42) pour le passage d'air du canal à air vers le compartiment passagers du moyen de locomotion étant défini entre le toit (1) et la partie supérieure de la hotte (19).

8. Structure suspendue de casier à bagages selon l'une quelconque des revendications précédentes, **caractérisée en ce qu'**elle comprend une pluralité de consoles (50) de la structure suspendue de casier à bagages pouvant être fixées auxdites consoles (30) du canal à air afin de supporter un recouvrement de base (48) de la structure suspendue de casier à bagage conçue pour supporter les bagages.

9. Structure suspendue de casier à bagages selon la revendication 8, **caractérisée en ce que** lesdites consoles (50) de la structure suspendue de casier à bagages comportent des crochets (56) susceptibles de s'engager dans des crochets complémentaires (36) prévus dans lesdites consoles à air (30) après interposition d'une entretoise (58) pour éliminer le jeu et fixer les divers composants les uns aux autres.

10. Structure suspendue de casier à bagages selon la revendication 8 ou 9,
**caractérisée en ce qu'**elle comprend des recouvrements de fond (83; 87) fixés auxdites consoles (50) de la structure suspendue de casier à bagages sous ledit recouvrement de base (48).

11. Structure suspendue de casier à bagages selon la revendication 10, **caractérisée en ce qu'**elle comprend un ensemble multiple (88) composé de lampes et/ou sorties d'air, montées dans au moins un desdits recouvrements de fond du canal à air et de la structure suspendue de casier à bagages (89, 83, 87) et disposées dans le canal à air et/ou dans l'espace créé entre le recouvrement de base (48) de la structure suspendue de casier à bagages et les recouvrements de fond (83, 87) de la structure suspendue de casier à bagages.

12. Structure suspendue de casier à bagages selon l'une quelconque des revendications 7 à 11, **caractérisée en ce qu'**est monté dans la partie supérieure dudit crochet (19) un support (44) pour la porte, auquel s'articule une porte (46) servant à fermer la structure suspendue de casier à bagages.
